# DEMANDE DE BREVET EUROPEEN

(11) **EP 1 959 156 A1**
(43) Date de publication de la demande: **20.08.2008**
(21) Numéro de dépôt: 08290149.7
(22) Date de dépôt: 15.02.2008
(51) Int. Cl.: F16F 9/58, B60G 15/06

(54) **Support antivibratoire et dispositif amortisseur antivibratoire employant ledit support**

(30) Priorité: 19.02.2007 FR 0701182
(71) Demandeur: Trelleborg Modyn, 44470 Carquefou (FR)
(72) Inventeur: Kieffer, Jérôme, 44300 Nantes (FR)
(74) Mandataire: Laget, Jean-Loup

(57) **Abrégé**

L'invention a pour objet un support (1) antivibratoire destiné à être interposé entre une tige (2) rigide d'amortisseur télescopique et un châssis de véhicule pour relier élastiquement la tige (2) et le châssis (3) aux fins d'amortir le transfert, de la tige (2) au châssis (3), des vibrations ou oscillations imposées à la tige (2), ce support (1) comprenant au moins une pièce (4) annulaire pourvue d'un orifice (5) traversant délimitant un passage axial d'axe x pour pouvoir enfiler la pièce (4) sur la tige (2) de l'amortisseur.

Ce support (1) antivibratoire est caractérisé en ce que la pièce (4) annulaire, de faible épaisseur, présente un rapport diamètre extérieur hors tout sur épaisseur maximale supérieur à 5 et est réalisée en un matériau thermoplastique présentant une dureté comprise dans la plage [40 Shore D - 80 Shore D], cette pièce (4) annulaire étant entre ses bords périphériques externe (7) et interne (8) conformée pour former une liaison déformable de type pont entre le châssis (3), ou une pièce (11) solidaire en déplacement du châssis (3), et la tige (2), ou une pièce (10) solidaire en déplacement de la tige (2).

## Description

La présente invention concerne un support antivibratoire destiné à être interposé entre une tige rigide d'amortisseur télescopique et un châssis de véhicule pour relier élastiquement la tige et le châssis aux fins d'amortir le transfert, de la tige au châssis, des vibrations ou oscillations imposées à la tige, ce support comprenant au moins une pièce annulaire pourvue d'un orifice traversant délimitant un passage axial d'axe x pour pouvoir enfiler la pièce sur la tige de l'amortisseur.

A l'heure actuelle, de nombreuses conceptions d'attache d'amortisseur élastique existent. Dans toutes ces conceptions, l'élément élastique de liaison entre le châssis d'un véhicule et la tige d'amortisseur, mobile par rapport au châssis, est réalisé en caoutchouc. Le rapport de raideur entre les directions radiales et la direction axiale doit être compris entre 2 et 10. La demande de compactage vertical des attaches d'amortisseur, de la part des constructeurs automobiles, rend l'espace disponible pour insérer une attache d'amortisseur de plus en plus réduit dans la direction verticale. Ces valeurs deviennent difficilement atteignables avec du caoutchouc. Donc, pour satisfaire à ladite condition du rapport de raideur, les caractéristiques dimensionnelles du caoutchouc doivent être augmentées, ceci impliquant un espace nécessaire plus important pour réaliser la liaison d'attache, fiable et efficace, entre la tige d'amortisseur et le châssis.

Le document US 2004/231936 décrit un dispositif d'absorption de chocs interposé entre une tige et un châssis. Ce dispositif prévoit la présence d'un manchon réalisé en caoutchouc ou en composé élastomère similaire présentant une dureté de 45 à 75 Shore D. Il semblerait que les valeurs de dureté annoncées soient erronées dans la mesure où le caoutchouc présente une dureté maximale de 80 shores A.

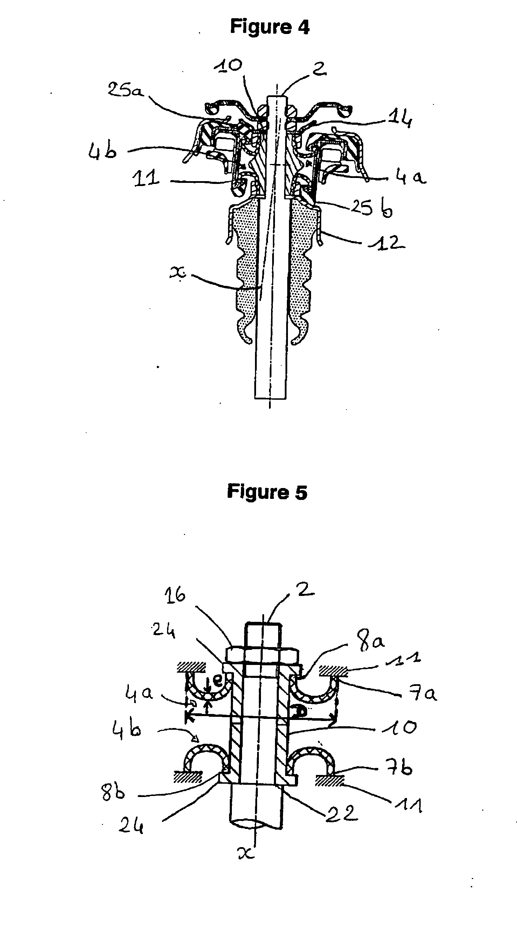

Par ailleurs, la forme du manchon, tel que représenté à la figure 5 laisse penser qu'avec une telle plage de dureté toute déformation sera impossible et n'assurera donc pas le filtrage des vibrations pour lequel il est conçu.

Un but de la présente invention est de fournir un support anti-vibratoire entre la tige d'amortisseur et le châssis d'un véhicule dont le matériau et la géométrie permettent de satisfaire aux conditions de faible raideur axiale et de forte raideur radiale tout en conservant un faible encombrement.

A cet effet, l'invention concerne un support antivibratoire et un dispositif amortisseur antivibratoire employant ledit support antivibratoire

L'invention a pour objet un support antivibratoire destiné à être interposé entre une tige rigide d'amortisseur télescopique et un châssis de véhicule pour relier élastiquement la tige et le châssis aux fins d'amortir le transfert, de la tige au châssis, des vibrations ou oscillations imposées à la tige, ce support comprenant au moins une pièce annulaire pourvue d'un orifice traversant délimitant un passage axial d'axe x pour pouvoir enfiler la pièce sur la tige de l'amortisseur, caractérisé en ce que ladite pièce annulaire de faible épaisseur présente un rapport diamètre extérieur hors tout sur épaisseur maximale supérieur à 5 et est réalisée en un matériau thermoplastique présentant une dureté comprise dans la plage [40 Shore D - 80 Shore D], cette pièce annulaire étant entre ses bords périphériques externe et interne conformée pour former une liaison déformable de type pont entre le châssis, ou une pièce solidaire en déplacement du châssis, et la tige, ou une pièce solidaire en déplacement de la tige.

La réalisation de la pièce annulaire sous forme d'une pièce de faible épaisseur, avec une épaisseur généralement comprise entre 1 mm et 8 mm permet à ladite pièce, en dépit de sa dureté, de se déformer sous charge dans des conditions normales d'utilisation du véhicule tout en conservant un rapport de raideur entre les directions radiale et axiale optimale.

De préférence, les zones de liaison de la, ou chaque pièce, au châssis, ou à une pièce solidaire en déplacement du châssis, d'une part, et à la tige, ou à une pièce solidaire en déplacement de la tige, d'autre part, sont formées par les bords périphériques respectivement externe et interne de ladite pièce.

Dans un premier mode de réalisation, la pièce annulaire présente en section transversale, entre ses bords périphériques respectivement externe et interne, une forme générale d'arc de préférence plein cintre, ou rampant, ou en anse de panier.

Dans un autre mode de réalisation, la, ou au moins une, pièce annulaire affecte la forme d'un disque ou d'une coupelle évidé(e) centralement.

De préférence, le bord périphérique interne de la pièce se prolonge au moins d'un coté de ladite pièce pour former un fût cylindrique délimitant le passage axial à l'intérieur duquel peut être disposée la tige de l'amortisseur.

De préférence, le matériau thermoplastique est choisi parmi le groupe de composés: Polymère Copolyester Elastomère, Polymère Copolyamide Elastomère, Uréthane.

De préférence, le support antivibratoire comprend au moins deux pièces annulaires coaxiales solidarisées, chaque pièce, pourvue d'un orifice traversant délimitant un passage axial pour pouvoir être enfilée sur la tige d'amortisseur, étant conformée entre ses bords périphériques interne et externe pour former une liaison déformable de type pont entre châssis, ou pièce solidaire en déplacement du châssis, et tige, ou pièce solidaire en déplacement de la tige, lesdites parties de pièces formant pont étant maintenues espacées d'une pièce à une autre dans la direction axiale. Les pièces présentent chacune, en section transversale entre leurs bords périphériques interne et externe, une forme d'arc à convexité tournée vers l'intérieur de l'espace s'étendant entre lesdites pièces.

Avantageusement, le dispositif amortisseur antivibratoire du type destiné à être interposé entre une tige rigide d'amortisseur et un châssis de véhicule pour relier élastiquement la tige et le châssis aux fins d'amortir le transfert, de la tige au châssis, des vibrations ou oscillations imposées à la tige, ledit dispositif comprenant une pièce, dite armature, rigide, centrale, annulaire ou cylindrique, apte à être rendue solidaire de la tige, une pièce dite armature, rigide, périphérique, annulaire ou cylindrique, apte à être rendue solidaire du châssis, et des moyens de liaison déformable entre lesdites armatures lors d'un déplacement relatif desdites armatures entre elles, est caractérisé en ce que lesdits moyens de liaison entre armatures comprennent au moins un support antivibratoire conforme à l'invention. Les armatures sont disposées coaxiales, l'armature périphérique, qui entoure l'armature centrale en ménageant entre lesdites armatures un espace annulaire, étant maintenue écartée de l'armature centrale par ledit support.

L'invention sera mieux comprise, et d'autres buts, détails, caractéristiques et avantages de celle-ci apparaîtront plus clairement au cours de la description explicative détaillée qui va suivre de plusieurs modes de réalisation de l'invention donné à titre d'exemple purement illustratif et non limitatif, en référence aux dessins annexés.

Sur ces dessins :
- la figure 1 est une vue en coupe d'un dispositif amortisseur pourvu d'un support antivibratoire, en position de repos, selon un premier mode de réalisation de l'invention,
- la figure 2 est une vue en coupe du dispositif amortisseur pourvu du support antivibratoire, en position axiale extrême haute,
- la figure 3 est une vue en coupe du dispositif amortisseur pourvu du support antivibratoire, en position axiale extrême basse,
- la figure 4 est une vue en coupe du dispositif amortisseur pourvu du support antivibratoire, en position angulaire extrême,
- la figure 5 est une vue schématique en coupe d'un deuxième mode de réalisation du dispositif amortisseur, dans laquelle chaque pièce du support antivibratoire est de forme annulaire avec une section en plein cintre entre ses bords périphériques externe et interne,
- la figure 6 est une vue schématique en coupe du dispositif amortisseur de la figure 5, dans laquelle la tige est en position basse correspondant à la figure 3,
- la figure 7 est une vue schématique en coupe d'un troisième mode de réalisation du dispositif amortisseur, dans laquelle le support antivibratoire a la forme d'un disque,
- la figure 8 est une vue en coupe d'un quatrième mode de réalisation du dispositif amortisseur, dans laquelle le support antivibratoire affecte une forme d'assiette.

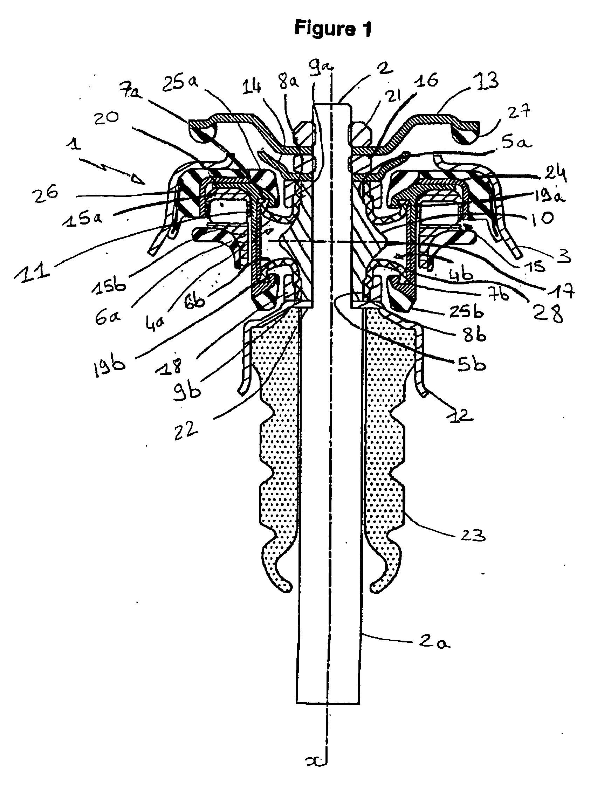

La figure 1 représente un dispositif amortisseur interposé entre une tige 2 d'amortisseur et un châssis 3 de véhicule pour relier élastiquement ladite tige 2 et le châssis 3 aux fins d'amortir le transfert, de la tige 2 au châssis 3, des vibrations ou oscillations imposées à la tige 2. La tige 2 présente une partie 2a inférieure, de diamètre plus grand que celui de la tige 2, reliée à ladite tige 2 par un épaulement 22 radial. En appui sur cet épaulement 22 radial, est positionnée une coupelle 12 de butée de chocs. Cette coupelle 12, de forme générale cylindrique, présente une surface latérale coaxiale à la partie inférieure 2a de la tige 2. Entre la coupelle 12 et la partie inférieure 2a de la tige 2 est insérée une butée 23 de chocs. Cette butée 23 de chocs, réalisée généralement en matériau élastiquement déformable, est en forme de manchon sensiblement cylindrique.

Une armature 10, dite centrale, est réalisée de manière symétrique par rapport à son plan médian transversal. Cette armature 10, de forme générale cylindrique, présente un orifice traversant ménagé axialement. Ladite armature 10 comporte un renflement 17, formé sur sa surface externe et positionné dans sa partie médiane. De part et d'autre de ce renflement 17, l'armature 10 centrale présente deux extrémités sensiblement cylindriques, chacune de ces extrémités servant à réception par emmanchement d'une pièce 4. L'armature 10 centrale est destinée à être emmanchée sur la tige 2, l'extrémité inférieure de cette armature 10 venant en appui sur l'épaulement radial 22 de la tige 2.

Deux pièces 4 du dispositif amortisseur étant sensiblement identiques, à cet effet, une seule sera décrite.

La pièce 4 est une pièce annulaire qui comporte un orifice 5 traversant. Cet orifice 5 délimite un passage axial d'axe x afin de pouvoir enfiler la pièce 4 sur l'une des extrémités sensiblement cylindriques de l'armature 10 centrale.

La partie 6 périphérique audit orifice 5 de la pièce 4, assimilable à une collerette, est conformée pour former une liaison déformable de type pont entre le châssis 3 ou une pièce 11 solidaire en déplacement du châssis 3 et la tige 2 ou une pièce 10 solidaire en déplacement de la tige 2. La pièce 4 annulaire présente donc un bord périphérique interne 8 servant à la délimitation de l'orifice 5 et un bord périphérique externe 7 entre lesquels s'étend la surface 6 ou partie 6 périphérique à l'orifice 5 de ladite pièce. Dans tous les exemples représentés, ces bords périphériques sont circulaires, coaxiaux, et forment donc l'un un bord 8 circonférentiel interne, l'autre un bord 7 circonférentiel externe. Dans les figures 1 à 6, la pièce 4 annulaire présente en section transversale, entre ses bords périphériques respectivement externe 7 et interne 8, une forme générale d'arc de préférence plein cintre, ou rampant, ou en anse de panier. La surface 6 annulaire de la pièce 4 limitée par les bords circonférentiels externe et interne est donc une surface courbe délimitant les faces dites de dessus et de dessous dudit anneau, l'une convexe, l'autre concave. En d'autres termes, la surface 6 annulaire limitée par les bords périphériques circulaires coaxiaux voire concentriques externe 7 et interne 8 est une surface courbe à section de préférence parabolique ou semi-circulaire. Cette surface forme, autour de l'orifice 5, un canal ou gouttière à fond concave et confère à la pièce 4 annulaire la forme d'un moule couronne à fond concave. En outre, parfois, le bord 8 périphérique interne de la pièce 4 se prolonge au moins d'un coté de ladite pièce 4 pour former un fût 9 cylindrique délimitant le passage axial à l'intérieur duquel peut être disposée la tige 2 de l'amortisseur. Dans ce cas, le bord libre du fût 9 forme le bord périphérique 8 interne de la pièce 4.

La pièce 4 est réalisée en un matériau élastiquement déformable, notamment thermoplastique, et possède des caractéristiques mécaniques particulières telle qu'annoncées ci-dessus. Pour permettre une déformation de la pièce 4 annulaire dont la dureté est comprise entre 40 Shore D et 80 Shore D, ladite pièce 4 présente, indépendamment de sa forme, un rapport diamètre extérieur hors tout sur épaisseur maximale supérieure à 5, de préférence supérieure à 10. De même, la pièce 4 annulaire est une pièce de faible épaisseur de type rondelle à surface plane ou courbe. L'épaisseur est donc de préférence comprise entre 1 mm et 8 mm.

Chaque pièce 4 est enfilée, sur l'une des deux extrémités sensiblement cylindrique de l'armature 10 centrale au moyen de l'orifice 5 formé par le fût 9 de chacune des deux pièces 4. Ainsi, chaque fût 9 entoure l'une desdites extrémités. Les pièces 4 sont espacées l'une de l'autre par le renflement 17 formé sur l'armature 10 centrale. Chaque pièce 4 est maintenue sur l'armature 10 centrale au moyen d'un anneau 18, celui-ci enserrant le fût 9 sur l'extrémité de l'armature 10. A l'état enfilé des pièces 4 sur l'armature 10 centrale, la pièce 4 supérieure au renflement 17 est référencée 4a, tandis que la pièce 4 inférieure au renflement 17 est référencée 4b. De façon similaire, les références des éléments composant la pièce 4a sont suivies de la lettre « a » tandis que celles des éléments composant la pièce 4b sont suivies de la lettre « b ». Les pièces 4a, 4b sont disposées de sorte que la convexité de la surface délimitée par les bords périphériques interne 8a et externe 7a de la pièce 4a formant la surface 6a soit en regard de la convexité de la surface formant la surface 6b de la pièce 4b. A l'état monté sur l'armature 10 centrale, le bord 8b périphérique interne de la pièce 4b est en appui sur la coupelle 12 de butée de chocs, tandis que le bord 8a périphérique interne de la pièce 4a est retenu axialement par une coupelle 14 de limitation qui sera décrite ultérieurement.

Une armature 11, dite périphérique, est de forme générale annulaire. Ladite armature 11, rigide, est formée, par exemple, d'une partie 11 b inférieure et d'une partie 11 a supérieure, coaxiales entre elles. Ces deux parties 11 a et 11 b sont solidarisables entre elles, par exemple par soudure, pour former l'armature 11. Cette armature 11 comporte, sur le bord supérieur de sa paroi périphérique interne, un cran 19a et, sur le bord inférieur de sa paroi périphérique interne un cran 19b. Les crans 19a et 19b sont disposés en vis à vis. L'armature 11 est disposée coaxialement à la tige 2 d'amortisseur et positionnée à distance, autour de l'armature 10 centrale.

Lorsque la pièce 4a est à l'état monté sur l'armature 10 centrale, le bord 7a périphérique externe coopère avec le cran 19a de l'armature 11. De façon similaire, le bord 7b périphérique externe coopère avec le cran 19b lorsque la pièce 4b est montée sur ladite armature 10. Ainsi, chaque pièce 4 forme une liaison de type pont entre l'armature 10 centrale et l'armature 11 périphérique. Une bague 28, est déposée, de façon coaxiale à l'armature 11, sur la paroi interne cette armature 11, entre les crans 19a, 19b. Cette bague 28 assure la maintien des bords 7a, 7b, périphériques externes des pièces 4a, 4b, dans leur cran respectif 19a, 19b. Les deux pièces 4a, 4b, chacune reliée à l'armature 10 centrale et à l'armature 11 périphérique, définissent un espace annulaire. Cet espace annulaire est délimité par la surface périphérique externe de l'armature 10 centrale, la surface périphérique interne de l'armature 11 périphérique et la surface convexe de chacune des deux pièces 4a, 4b.

L'armature 11 périphérique comporte une bride 24 prolongeant le bord supérieur de ladite armature 11 et s'étendant vers l'extérieur de manière radiale sur le pourtour de celle-ci. En appui sur la bride 24, est disposée une couronne 20, sensiblement circulaire dont la section transversale est en forme de cornière. Cette couronne 20 est positionnée sur la surface supérieure de ladite bride 24 de manière à former, en coopération avec la surface périphérique extérieure de l'armature 11 périphérique, un logement apte à recevoir la rondelle supérieure 15a d'un roulement 15, tandis que la rondelle inférieure 15b de ce roulement 15 est maintenue en appui sur un ressort non représenté. Ce roulement 15 est destiné à faciliter le pivotement dudit ressort autour de l'axe x. La surface externe de la couronne 20 est revêtue d'un élément 26 élastiquement déformable, du type élastomère. Le bord supérieur de l'armature 11 périphérique, qui n'est pas recouvert par la couronne 20, est revêtu d'un élément 25a. Le bord inférieur de ladite armature 11 est revêtu d'un élément 25b. Ces deux éléments 25a et 25b sont réalisés en un matériau élastiquement déformable, tel qu'un élastomère. En appui sur l'élément 26 est disposé le châssis 3, cet élément 26 assurant une liaison élastique entre la couronne 20 et le châssis 3.

Une coupelle 14, dite de limitation, a une forme générale d'assiette et présente un orifice central. Cet orifice permet à la coupelle 14 de limitation d'être enfilée sur la tige 2 d'amortisseur. Cette coupelle 14 est disposée en appui sur une surface formée par les bords supérieurs de l'armature 10 centrale, de la pièce 4a et de l'anneau 18. Cette coupelle 14 est maintenue fixe axialement sur ladite surface au moyen d'un écrou 16 coopérant avec un filetage formé sur la zone supérieure de la tige 2 d'amortisseur. Cet écrou 16 permet de rendre solidaire en déplacement les différentes pièces interposées entre l'épaulement 22 radial de la tige 2 et cet écrou 16.

En appui sur cet écrou 16, est disposée une coupelle 13, dite de rebord. Cette coupelle 13 affecte la forme d'une assiette. Le bord périphérique inférieur de ladite coupelle 13 est pourvu d'un bourrelet 27 réalisé en matériau élastiquement déformable, du type élastomère. La coupelle 13 de rebord est maintenue fixe axialement sur ladite tige 2 entre l'écrou 16 et un écrou 21, également vissé sur ladite tige 2.

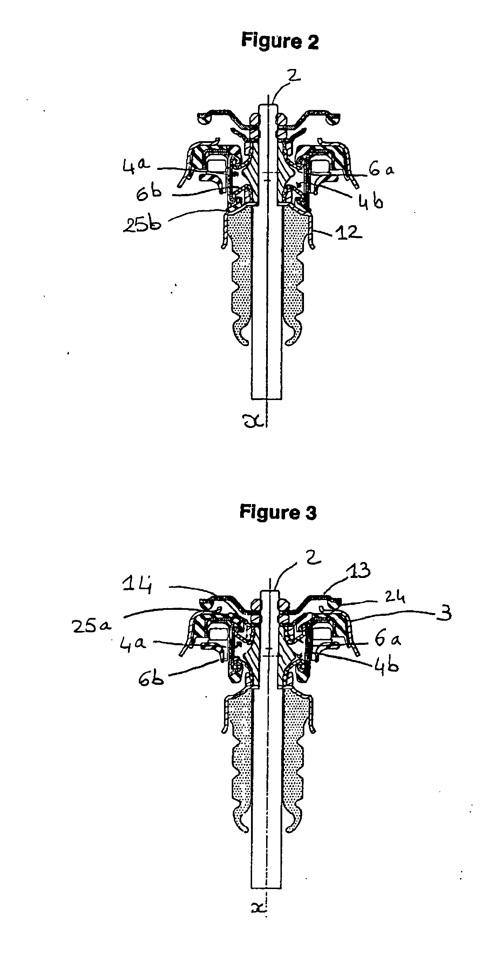

La figure 2 illustre le dispositif amortisseur lorsque la tige 2 d'amortisseur est en position extrême haute. Dans cette position, l'élément 25b élastiquement déformable est en appui sur la coupelle 12 de butée de chocs. Les pièces 4a et 4b sont déformées élastiquement. La surface 6a vient en appui sur la surface extérieure de l'armature 10 centrale, tandis que la surface 6b s'écarte de ladite surface.

La figure 3 illustre le dispositif amortisseur lorsque la tige 2 d'amortisseur est en position extrême basse. Dans cette position, la coupelle 14 de limitation est en appui sur l'élément 25a élastiquement déformable. Les pièces 4a et 4b sont déformées élastiquement. La surface 6b vient en appui sur la surface extérieure de l'armature 10 centrale, tandis que la surface 6a s'écarte de ladite surface. Le bourrelet 27 de la coupelle 13 de rebord est susceptible de venir en appui sur le châssis 3.

La figure 4 illustre le dispositif amortisseur lorsque la tige 2 d'amortisseur présente une position angulaire extrême par rapport à sa position de repos, dans cette position, l'axe de la tige 2 d'amortisseur fait un angle avec l'axe x. La coupelle 14 de limitation est partiellement en appui sur une partie de l'élément 25a élastiquement déformable et solidaire de l'armature 11 périphérique. L'élément 25b, solidaire de ladite armature 11, est partiellement en appui sur la coupelle 12 de butée de chocs. Les pièces 4a et 4b sont déformées de façon à rester liées à la fois à l'armature 10 centrale et à l'armature 11 périphérique.

La description des vues suivantes a pour but d'illustrer différentes configurations du dispositif amortisseur, notamment les pièces 4.

La figure 5 est une vue schématique en coupe d'un deuxième mode de réalisation du dispositif amortisseur tel que décrit précédemment dans lequel certains éléments constituant ce dispositif ont été symbolisés. Le dispositif tel que représenté est en position de repos. Dans cette configuration du dispositif amortisseur, l'armature 10 centrale, affectant la forme d'un cylindre évidé pourvu aux deux extrémités d'une bride 24, est enfilée sur la tige 2. Cette armature 10 est solidaire en déplacement de la tige 2 d'amortisseur, étant en appui sur l'épaulement radial 22 de ladite tige 2 et sur un écrou 16 vissé sur cette même tige 2.

Les pièces 4a et 4b étant sensiblement identiques, une seule de ces deux pièces 4a, 4b sera décrite. La pièce 4a est de forme générale annulaire. La surface de la pièce 4a qui s'étend du bord 8a périphérique interne au bord 7a périphérique externe affecte en coupe transversale une forme courbe en arc de type plein cintre.

Sur l'armature 10 sont enfilées, de façon symétrique par rapport au plan médian de l'armature 10 centrale, d'une part en position supérieure, la pièce 4a et d'autre part en position inférieure, la pièce 4b. Ainsi, le bord 8a périphérique interne de la pièce 4a est en appui sur le bord radial dirigé vers le plan médian de la bride 24 supérieure. Le positionnement de la pièce 4b sur l'armature 10 centrale est réalisée de façon symétrique à celle de la pièce 4a par rapport au plan médian de ladite armature 10.

L'armature 11 périphérique est symbolisé de manière conventionnelle comme étant un élément fixe. Ainsi à l'état monté sur l'armature 10, le bord 7a périphérique externe de la pièce 4a est en appui sur l'armature 11. A l'état monté, les pièces 4a, 4b ont leur surface convexe dirigée l'une vers l'autre.

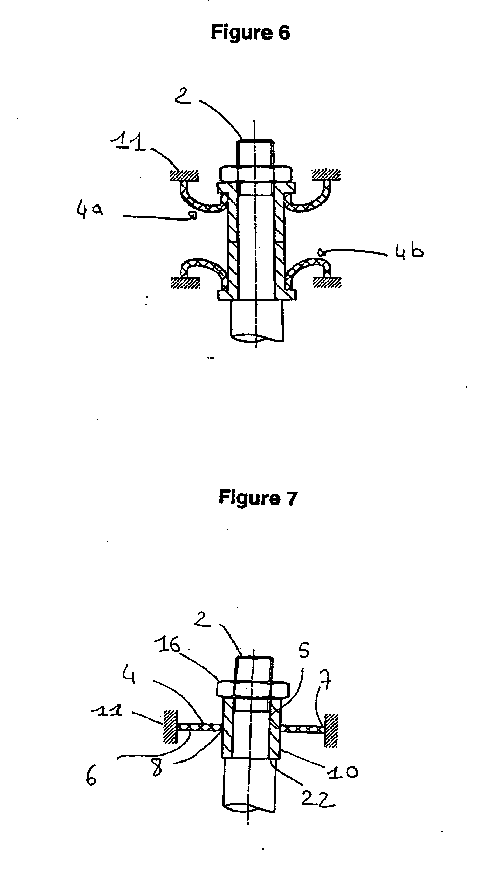

La figure 6 illustre la configuration du dispositif amortisseur représenté à la figure 5, dans lequel la tige 2 est déplacée vers le bas par rapport à l'armature 11 périphérique, symbolisée comme étant fixe. Ainsi, les pièces 4a et 4b se déforment élastiquement, notamment leur section transversale.

La figure 7 illustre un troisième mode de réalisation du dispositif amortisseur dans laquelle, l'armature 10, ayant une forme d'un cylindre évidé, est solidaire en déplacement de la tige 2 d'amortisseur par l'intermédiaire d'un épaulement 22 radial formé sur cette tige 2 et d'un écrou 16 vissé sur ladite tige 2.

Une seule pièce 4, élastiquement déformable, forme un disque évidé en son centre. Cette pièce s'étend depuis son bord 8 périphérique interne, lequel délimite un orifice 5 permettant à ladite pièce 4 d'être enfilée sur l'armature 10 centrale, vers son bord 7 périphérique externe. Ladite pièce 4, de type rondelle, assure une liaison élastique entre l'armature 10 centrale et l'armature 11 périphérique, symbolisée comme étant fixe. Ainsi, le bord 8 périphérique interne est relié à ladite armature 10 tandis que le bord 7 périphérique externe est relié à ladite armature 11.

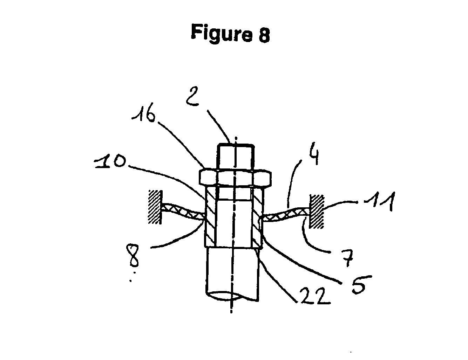

La figure 8 illustre une configuration du dispositif amortisseur, similaire à la configuration précédente dans laquelle, la pièce 4 n'a plus la forme d'un disque mais affecte la forme d'une assiette ou d'une coupelle évidée centralement. A nouveau, la pièce 4 peut s'assimiler à une rondelle.

Comme mentionné précédemment, les différents matériaux utilisables pour réaliser la pièce 4 présentent des propriétés mécaniques spécifiques. En effet, pour assurer une liaison élastique efficace et fiable entre l'armature10 centrale et l'armature 11 périphérique, il est nécessaire d'utiliser un matériau appartenant à la famille des thermoplastiques (TPE). Le matériau choisi parmi cette famille de thermoplastiques doit, en outre, présenter une dureté comprise entre 40 Shore D et 80 Shore D.

En effet, pour des duretés inférieures à 40 Shore D, la géométrie de la pièce 4 ne permet pas d'assurer une raideur radiale suffisante, ceci entraînant un mauvais guidage de la tige 2 d'amortisseur.

Pour des duretés supérieures à 80 Shore D, la géométrie de la pièce 4 ne permet pas d'obtenir une course axiale de la tige 2 d'amortisseur suffisant. Il y a, dans ce cas, un risque important de plastification du matériau constituant la pièce 4 qui entraîne une déformation permanente de cette pièce 4.

Parmi les exemples de matériaux appartenant à la famille des thermoplastiques (TPE) susceptibles de convenir dans la réalisation de la pièce 4, on peut retenir le groupe de composés :
- Polymère Copolyester Elastomère,
- Polymère Copolyamide Elastomère,
- Uréthane.

De la même manière, pour une déformation appropriée, la pièce 4 présente un rapport diamètre extérieur hors tout sur épaisseur maximale supérieur à 5, de préférence supérieur à 10 et une épaisseur de préférence comprise entre 1 mm et 8 mm.

Bien que l'invention ait été décrite en relation avec plusieurs modes de réalisation particuliers, il est bien évident qu'elle n'est nullement limitée et qu'elle comprend tous les équivalents techniques des moyens décrits ainsi que leurs combinaisons si celles-ci entrent dans le cadre de l'invention.

## Revendications

1. Support (1) antivibratoire destiné à être interposé entre une tige (2) rigide d'amortisseur télescopique et un châssis de véhicule pour relier élastiquement la tige (2) et le châssis (3) aux fins d'amortir le transfert, de la tige (2) au châssis (3), des vibrations ou oscillations imposées à la tige (2), ce support (1) comprenant au moins une pièce (4) annulaire pourvue d'un orifice (5) traversant délimitant un passage axial d'axe x pour pouvoir enfiler la pièce (4) sur la tige (2) de l'amortisseur,
**caractérisé en ce que** ladite pièce (4) annulaire, de faible épaisseur, présente un rapport diamètre (D) extérieur hors tout sur épaisseur (e) maximale supérieur à 5 et est réalisée en un matériau thermoplastique présentant une dureté comprise dans la plage [40 Shore D - 80 Shore D], cette pièce (4) annulaire étant entre ses bords périphériques externe (7) et interne (8) conformée pour former une liaison déformable de type pont entre le châssis (3), ou une pièce (11) solidaire en déplacement du châssis (3), et la tige (2), ou une pièce (10) solidaire en déplacement de la tige (2).

2. Support (1) antivibratoire selon la revendication 1,
**caractérisé en ce que** les zones de liaison de la, ou chaque pièce (4), au châssis (3), ou à une pièce (11) solidaire en déplacement du châssis (3), d'une part, et à la tige (2), ou à une pièce (10) solidaire en déplacement de la tige (2), d'autre part, sont formées par les bords périphériques respectivement externe (7) et interne (8) de ladite pièce (4).

3. Support (1) antivibratoire selon l'une des revendications 1 et 2,
**caractérisé en ce que** la, ou au moins une, pièce (4) annulaire affecte la forme d'un disque ou d'une coupelle évidé(e) centralement.

4. Support (1) antivibratoire selon l'une des revendications 1 et 2,
**caractérisé en ce que** la, ou au moins une, pièce (4) annulaire présente en section transversale, entre ses bords périphériques respectivement externe (7) et interne (8), une forme générale d'arc de préférence plein cintre, ou rampant, ou en anse de panier.

5. Support (1) antivibratoire selon l'une des revendications 1 à 4,
**caractérisé en ce que** le bord (8) périphérique interne de la pièce (4) se prolonge au moins d'un coté de ladite pièce (4) pour former un fût (9) cylindrique délimitant le passage axial à l'intérieur duquel peut être disposée la tige (2) de l'amortisseur.

6. Support (1) antivibratoire selon l'une des revendications 1 à 5,
**caractérisé en ce que** le matériau thermoplastique est choisi parmi le groupe de composés: Polymère Copolyester Elastomère, Polymère Copolyamide Elastomère, Uréthane.

7. Support antivibratoire selon l'une des revendications 1 à 6,
**caractérisé en ce qu'**il comprend au moins deux pièces (4) annulaires coaxiales solidarisées, chaque pièce (4), pourvue d'un orifice (5) traversant délimitant un passage axial pour pouvoir être enfilée sur la tige (2) d'amortisseur, étant conformée entre ses bords périphériques interne et externe pour former une liaison déformable de type pont entre châssis (3), ou pièce (11) solidaire en déplacement du châssis (3), et tige (2), ou pièce (10) solidaire en déplacement de la tige (2), lesdites parties (6) de pièces formant pont étant maintenues espacées d'une pièce à une autre dans la direction axiale.

8. Support (1) antivibratoire selon la revendication 7,
**caractérisé en ce que** lesdites pièces (4) présentent chacune, en section transversale entre leurs bords périphériques interne et externe, une forme générale d'arc à convexité tournée vers l'intérieur de l'espace s'étendant entre lesdites pièces (4).

9. Dispositif amortisseur antivibratoire du type destiné à être interposé entre une tige (2) rigide d'amortisseur et un châssis (3) de véhicule pour relier élastiquement la tige (2) et le châssis (3) aux fins d'amortir le transfert, de la tige (2) au châssis (3), des vibrations ou oscillations imposées à la tige (2), ledit dispositif comprenant une pièce (10), dite armature, rigide, centrale, annulaire ou cylindrique, apte à être rendue solidaire de la tige (2), une pièce (11) dite armature, rigide, périphérique, annulaire ou cylindrique, apte à être rendue solidaire du châssis (3), et des moyens de liaison déformable entre lesdites armatures lors d'un déplacement relatif desdites armatures entre elles,
**caractérisé en ce que** lesdits moyens de liaison entre armatures comprennent au moins un support (1) antivibratoire conforme à l'une des revendications 1 à 8.

10. Dispositif selon la revendication 9,
**caractérisé en ce que** les armatures (10, 11) sont disposées coaxiales, l'armature (11) périphérique, qui entoure l'armature (10) centrale en ménageant entre lesdites armatures un espace annulaire, étant maintenue écartée de l'armature (10) centrale par ledit support (1).
